(19) Europäisches Patentamt
European Patent Office
Office européen des brevets

(11) **EP 4 600 398 A1**

(12) **EUROPEAN PATENT APPLICATION**
published in accordance with Art. 153(4) EPC

(43) Date of publication:
**13.08.2025 Bulletin 2025/33**

(21) Application number: **23884293.4**

(22) Date of filing: **12.07.2023**

(51) International Patent Classification (IPC):
$C22C\ 38/02^{(2006.01)}$   $C22C\ 38/04^{(2006.01)}$
$C22C\ 38/06^{(2006.01)}$   $C22C\ 38/14^{(2006.01)}$
$B21B\ 1/26^{(2006.01)}$   $B21B\ 37/16^{(2006.01)}$
$B21B\ 37/74^{(2006.01)}$   $B22D\ 11/00^{(2006.01)}$
$C22C\ 33/06^{(2006.01)}$

(52) Cooperative Patent Classification (CPC):
B21B 1/26; B21B 37/16; B21B 37/74; B22D 11/00;
C22C 33/06; C22C 38/02; C22C 38/04;
C22C 38/06; C22C 38/14; Y02P 10/20

(86) International application number:
**PCT/CN2023/106970**

(87) International publication number:
**WO 2024/093354 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.11.2022 CN 202211358437**

(71) Applicant: **Bengang Steel Plates Co., Ltd.
Benxi, Liaoning 117022 (CN)**

(72) Inventors:
• **ZHOU, Yanfeng**
  **Benxi, Liaoning 117022 (CN)**
• **LIU, Zhipu**
  **Benxi, Liaoning 117022 (CN)**
• **MIAO, Jun**
  **Benxi, Liaoning 117022 (CN)**
• **ZHANG, Chengming**
  **Benxi, Liaoning 117022 (CN)**
• **MA, Siyuan**
  **Benxi, Liaoning 117022 (CN)**
• **XU, Xueli**
  **Benxi, Liaoning 117022 (CN)**
• **YU, Jian**
  **Benxi, Liaoning 117022 (CN)**

(74) Representative: **Murgitroyd & Company
165-169 Scotland Street
Glasgow G5 8PL (GB)**

(54) **700 MPA-GRADE HOT-ROLLED VEHICLE FRAME STEEL WITH THIN SPECIFICATION OF 1.2-2.0 MM AND MANUFACTURING METHOD THEREFOR**

(57) The present invention relates to the technical field of steel and iron materials. Disclosed are 700 MPa-grade hot-rolled vehicle beam steel with a thin specification of 1.2-2.0 mm and a manufacturing method therefor. The hot-rolled vehicle beam steel of the present invention comprises the following chemical components in percentage by weight: C: 0.05-0.10%, Si: 0.10-0.25%, Mn: 1.10-1.35%, Al: 0.020-0.050%, Ti:0.105-0.130%, P≤ 0.020%, S≤0.005%, N:0.0020-0.0050%, O:0.0010-0.0030%, rare earth Re≤0.01%, and the balance of Fe and inevitable impurities, wherein in rare earth Re, Ce≥ 40% and La≥ 30%. According to the present invention, by means of the good matching of a hot rolling process and the rolling capability of a rolling mill, the production of an extremely thin specification under low-cost component design is achieved, high value-added products of this steel grade are added, and the gap in thin specification under this strength is filled; moreover, compared with the same grade, the cost of steel is reduced by greater than 50 yuan per ton, upgrading and updating of products are achieved, vehicle weight reduction, energy saving and consumption reduction, and rational use of resources such as titanium alloys are implemented, and personal safety can be well guaranteed.

FIG. 3

**Description**

## TECHNICAL FIELD

The present invention belongs to the technical field of steel and iron materials, in particular to a 700 MPa-grade hot-rolled vehicle beam steel with a specification of 1.2-2.0 mm and a manufacturing method therefor, and especially for automobile side beams and longitudinal beams and the like.

## BACKGROUND ART

The rapid development of the automotive industry has led to a continuous increase in the number of vehicles in use. As the world is paying more and more attention to environmental protection, resources, and energy, the automotive industry is required to develop toward lightweight, safety, environmental protection and energy saving. With the promulgation of the newly revised GB1589-2016 standard *"Limits of dimensions, axle load and masses for motor vehicles, trailers and combination vehicles ",* overloading and oversized vehicles will be strictly regulated. High-strength side beam steels can reduce the weight of vehicles, improving both the safety performance of vehicles and the fuel efficiency while reducing exhaust emissions, thereby promoting green development and contributing to a harmonious, ecologically sustainable society. China is rich in natural resources, with abundant reserves of titanium alloys and rare earth elements, but lacks niobium alloy, leading to low prices for titanium alloys and high prices for niobium alloys. At present, the 600-700 MPa-grade vehicle beam steels widely used in the industry generally adopt a Nb+Ti composite composition system, which is expensive. The next lower strength grade, Q355B, has insufficient strength and is not significantly effective in weight reduction, resulting in potential safety and quality issues. Meanwhile, it is difficult to produce 700 MPa-grade high-strength vehicle beam steel with a thickness of 1.2-2.0 mm due to its high strength, which requires a high matching degree between chemical composition design and hot rolling process, while the hot rolling process must meet the rolling capacity of the mill. Therefore, few manufacturers in the market can supply this type of vehicle beam steels.

## SUMMARY

To solve the technical issues existing in the prior art, objectives of the present invention are to provide a 700 MPa-grade hot-rolled vehicle beam steel with a specification of 1.2-2.0 mm and a manufacturing method therefor. The 700 MPa-grade hot-rolled vehicle beam steel with a specification of the present invention can achieve significant vehicle weight reduction, product upgrading and updating, low cost, and improved safety in use.

The objectives of the present disclosure are realized through the following solutions:

The present disclosure provides a 700 MPa-grade hot-rolled vehicle beam steel with a specification of 1.2-2.0 mm, including the following chemical components in percentage by weight: 0.05-0.10% of C, 0.10-0.25% of Si, 1.10-1.35% of Mn, 0.020-0.050% of Al, 0.105-0.130% of Ti, less than or equal to 0.020% of P, less than or equal to 0.005% of S, 0.0020-0.0050% of N, 0.0010-0.0030% of O, less than or equal to 0.01% of rare earth (Re), and the balance of Fe and inevitable impurities. The rare earth includes 48% of Ce, 32% of La, 5% of Pr, 5% of Nd, 8% of Pm+Sm+Eu+Gd, and the balance of Fe and other inevitable impurities. A lower yield strength of the vehicle beam steel is greater than or equal to 610 MPa, a tensile strength is greater than or equal to 680 MPa, and an elongation A after fracture is greater than or equal to 15 %.

Based on the abovementioned technical solutions, further, the 700 MPa-grade hot-rolled vehicle beam steel with a specification of 1.2-2.0 mm includes the following chemical components in percentage by weight: 0.07-0.10% of C, 0.10-0.20% of Si, 1.15-1.30% of Mn, 0.020-0.050% of Al, 0.105-0.125% of Ti, less than or equal to 0.015% of P, less than or equal to 0.003% of S, 0.0020-0.0050% of N, 0.0010-0.0030% of O, 0.001-0.005% of rare earth, and the balance of Fe and inevitable impurities. where the rare earth includes 48% of Ce, 32% of La, 5% of Pr, 5% of Nd, 8% of Pm+Sm+Eu+Gd, and the balance of Fe and other inevitable impurities.

The roles of the main elements are as follows:

C: With a content of 0.07-0.10wt% in the present disclosure. C is used for forming sufficient carbide strengthening phases. The higher the C content, the greater the brittleness and hardness, while steels with low C content has better toughness.

Si: With a content of 0.10-0.20wt% in the present disclosure. Si has a strong affinity for O and is a strong deoxidizing element, existing in solid solution within the steel. Si can enhance the strength, fatigue limit, corrosion resistance and wear resistance of the steel. However, excessive Si can lead to formation of oxides during hot rolling, degrading surface quality of the steel.

Mn: With a content of 1.15-1.30wt% in the present disclosure. Mn exists in solid solution within the steel, which is a solid solution strengthening element. Mn primarily exists in steel as MnS, which is usually added as a desulfurizer and deoxidizer during steelmaking. The interaction between Mn and S helps prevent hot shortness.

Ti: With a content of 0.105-0.125wt% in the present disclosure. Ti provides effects of grain refinement and precipitation strengthening. At high temperatures, Ti can dissolve into austenite and hinder the ($\gamma \rightarrow \alpha$) phase transformation. TiN and TiC precipitates can inhibit grain growth in austenite and recrystallization of deformed austenite, thereby refining the grain size. Additionally, the precipitated TiC ("effective Ti") has a strong strengthening effect. Moreover, Ti is abundant and inexpensive in China.

N: With a content of 0.0020-0.0050 wt% in the present disclosure. Excessive N content will interfere with the formation of effective Ti, adversely affecting strength.

O: With a content of 0.0010-0.0030wt% in the present disclosure. Low oxygen control can minimize inclusions and defects, improving toughness and plasticity.

P: With a content of less than or equal to 0.015% in the present disclosure. Generally, P is a harmful element in steel, which increases cold brittleness of steel, deteriorates weldability, reduces plasticity, and deteriorates cold-bending performance.

S: With a content of less than or equal to 0.003% in the present disclosure. As a harmful element, S causes hot brittleness in steels, reduces ductility and toughness of steels, makes steels prone to cracking during rolling, and is also unfavorable to weldability of steels.

Re: With a content of 0.001-0.005wt% in the present disclosure. Rare earth in high-strength steel has effects of grain refinement, inclusion modification, improved toughness and plasticity, and enhanced fatigue resistance. Segregation of rare earth at grain boundaries affects the metallographic structure and grain size of steels. Increasing rare earth content in steels makes the pearlite phase transformation start line shift to right, indicating an increased incubation period for pearlite phase transformation. Cerium has a significant effect on inhibiting grain growth, which enhances with the cerium content. Rare earth treatment effectively solves the problem of grain coarsening caused by omitting expensive Nb alloying. Moreover, rare earth treatment is superior to calcium treatment in optimizing properties of high-strength steels.

The present invention also provides a method for manufacturing the 700 MPa-grade hot-rolled vehicle beam steel with a specification of 1.2-2.0 mm, mainly including processes of steelmaking, hot rolling, coiling, and storage. The steelmaking process includes procedures of pretreatment, basic oxygen furnace smelting, refining, and continuous casting. The hot rolling process includes procedures of heating in reheating furnace, roughing, and finishing rolling. The coiling process employs a two-stage cooling at a coiling temperature of 630-670°C. The storage process involves slowly cooling a steel coil after rolling by perimeter-controlled cooling.

Based on the abovementioned technical solutions, further, before entering the basic oxygen furnace, a liquid steel is pretreated in the pretreatment procedure to reduce its S content less than or equal to 0.0030%, and slags are removed.

Based on the abovementioned technical solutions, further, the basic oxygen furnace smelting procedure includes performing single-hit carbon control in the basic oxygen furnace, argon purging in the ladle before tapping, and slag stopping in early tapping stage. The slag stopping in early tapping stage adopts a slag stopping plug, which is selected based on the size of the taphole after the previous heat has been tapped. Slag stopping is performed in late tapping stage to ensure that a slag thickness in a ladle is less than 120 mm. A tapping time is maintained at 4-7 min, and the shape of the taphole is controlled to avoid tapping vortex flow. Alloys are added to the liquid steel starting at one fifth of the tapping and ending at four fifths of the tapping for deoxidation alloying. Deoxidation alloying is carried out by adding ferrosilicon and ferroaluminum. Ferrosilicon is added first, then high manganese is added, and finally ferroaluminum is added after an interval of more than 1 min. N content in the ladle is controlled to be less than or equal to 25 ppm.

Based on the abovementioned technical solutions, further, the refining procedure adopts a single-path LF furnace for refining, which uses active lime and fluorite to prepare reducing slags with good fluidity and strictly controls the intensity of argon stirring to prevent exposure of the liquid steel. The liquid steel is treated with rare earth containing cerium, lanthanum and iron to fully spheroidize the inclusions and improve the product performance. Soft argon stirring is performed to the liquid steel for greater than or equal to 10 min before the end of the rare earth treatment. After normal refining heats, a ladle departure temperature from the LF furnace is controlled at 1563-1573 °C.

Based on the abovementioned technical solutions, further, in the continuous casting procedure, protected casting is maintained throughout the entire procedure process with no liquid steel exposed, a tundish is purged with argon before casting. The submerged entry nozzle of the tundish is required to be thoroughly cleaned after each heat's casting operation, and is required to remain vertical during casting. An immersion depth of a submerged entry nozzle of a ladle is controlled to be 200-250 mm. Slag detection is employed to control a slag carry-over amount, avoiding slag carry-over from the ladle. A secondary cooling zone of the continuous casting adopts a soft cooling mode and a soft reduction, with a reduction of 3-5mm of a cast billet thickness, a constant drawing speed controlled within 1.0-1.5 m/min and a superheat degree of the continuous casting less than or equal to 25°C.

Based on the abovementioned technical solutions, further, during the heating procedure in reheating furnace, a reheating furnace discharge temperature is 1220-1260°C. The atmosphere inside the reheating furnace is controlled to minimize the formation of iron oxide scale on the billet, ensuring uniform heating temperature. A residence time in the reheating furnace is greater than or equal to160 min and a soaking time is greater than or equal to 50 min.

Based on the abovementioned technical solutions, further, during the heating procedure in reheating furnace, the reheating furnace discharge temperature is 1220-1260°C; the residence time in the reheating furnace is 180-200 min, and the soaking time is 50-70 min.

Based on the abovementioned technical solutions, further, the rough rolling procedure adopts a 3+5 pass schedule pattern, that is, 3 passes of reciprocating rolling on rolling roll R1 and 5 passes of reciprocating rolling on rolling roll R2, producing a finished coil with thinner thickness and reducing loads on the finishing mill. Meanwhile, an initial rolling temperature of R1 is controlled to be greater than or equal to 1130°C, and high-pressure water descaling at high temperatures is performed to more effectively remove the iron oxide scale from the steel surface. A thickness of an intermediate billet is 30-45 mm, and a cumulative reduction rate of the rough rolling is greater than 75%.

Based on the abovementioned technical solutions, further, in the rough rolling procedure, the initial rolling temperature of R1 is 1140-1160°C, the thickness of the intermediate billet is 35-40 mm, and the cumulative reduction rate of the rough rolling stage is 80-85%.

Based on the abovementioned technical solutions, further, during the finishing rolling procedure, an initial rolling temperature of the finishing rolling is 1030-1100°C, a reduction rate of finishing roll F1 is greater than or equal to 45%, and a reduction rate of finishing roll F2 is greater than or equal to 25%. Since the thin-gauge high-strength steels of the present disclosure have large deformation resistance, a high-temperature final rolling is adopted at a final rolling temperature of greater than or equal to 890°C.

Based on the abovementioned technical solutions, further, during the finishing rolling procedure, the reduction rate of finishing roll F1 is 45-55%, the reduction rate of finishing roll F2 is 28-32%, and the final rolling temperature is 890-920°C.

Compared with the prior art, the present disclosure has the following beneficial effects:

Fully considering China's abundant titanium and rare earth resources, the 1.2-2.0 mm thin-gauge 700 MPa hot-rolled vehicle beam steel prepared by the present disclosure achieves, by means of optimal matching of hot-rolling process with mill capacity, the production of an extreme thin-gauge steel with low-cost composition design, adding high-value-added products to this steel grades and filling the gap for thin-gauge materials at this strength level. Moreover, compared with materials of the same grade, the present disclosure reduces production costs by over 50 yuan per ton. The present disclosure achieves product upgrading and updating, solves problems of vehicle weight reduction, energy saving and consumption reduction, and rational utilization of resources such as titanium alloys, and ensures personal safety.

## BRIEF DESCRIPTION OF THE DRAWINGS

In order to more clearly illustrate embodiments of the present disclosure, accompanying drawings related to the embodiments are briefly described below.

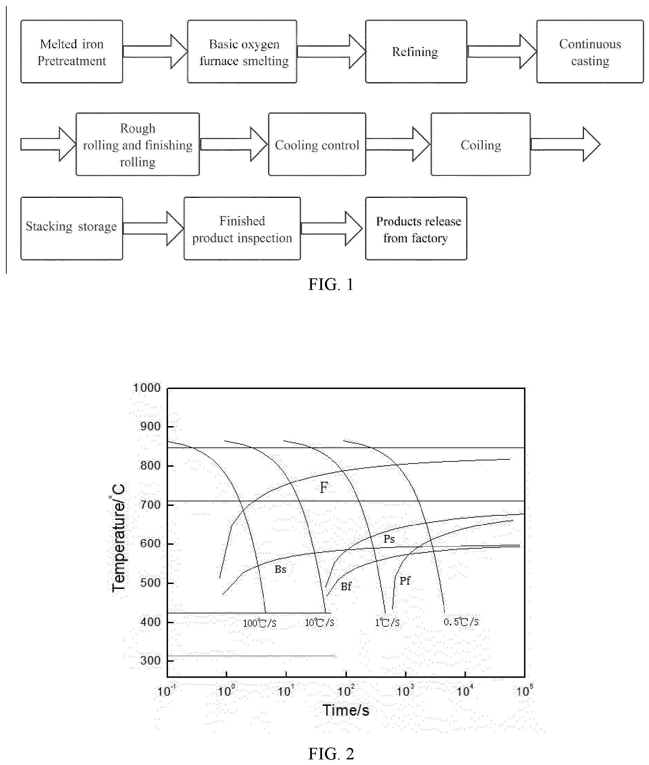

FIG. 1 shows a process flowchart of an embodiment.

FIG. 2 shows a continuous cooling transformation diagram, where F represents a ferrite transformation start temperature, Ps represents a pearlite transformation start temperature, Bs represents a bainite transformation start temperature, Pf represents a pearlite transformation finish temperature, and Bf represents a bainite transformation finish temperature.

FIG. 3 shows a metallographic microstructure of the vehicle beam steel in Embodiment 3.

FIG. 4 shows 180° bending test (d=0a) results of the vehicle beam steel in Embodiment 3, where FIG. 4 (a) is a top view and FIG. 4 (b) is a side view.

## DETAILED DESCRIPTION OF THE EMBODIMENTS

The present disclosure will be described in detail below with reference to embodiments. However, the implementation of the present disclosure is not limited thereto. Obviously, the embodiments described below are only some of the embodiments of the present disclosure. For those ordinary skilled in the art, other similar embodiments obtained without creative labor shall fall within the protection scope of the present disclosure.

### Embodiment 1

The embodiment provides a method for manufacturing a 1.5mm-thick 700 MPa-grade hot-rolled vehicle beam steel, with the chemical composition and weight percentages shown in table 1.

Table 1 Specification, composition and weight percentages (%) of vehicle beam steel

| Specification /mm | C | Si | Mn | P | S | Al | Ti | N | O | Re | Others |
|---|---|---|---|---|---|---|---|---|---|---|---|
| 1.5 | 0.07 | 0.14 | 1.20 | 0.014 | 0.002 | 0.036 | 0.105 | 0.0041 | 0.0015 | 0.003 | Fe and inevitable impurities |

The method mainly includes the following steps:

I. Steelmaking

1. Pretreatment procedure:

High-quality scrap steel was used as raw material, and the obtained melted iron was subjected to pretreatment to reduce its S content to less than or equal to 0.0030% before entering the basic oxygen furnace, and slags were removed completely.

2. Basic oxygen furnace smelting procedure:

Single-hit carbon control was employed in the basic oxygen furnace smelting procedure, avoiding reblowing operations. The ladle was purged with argon before tapping. Slag stopping was performed in early tapping stage using a slag stopping plug, which was selected based on the size of the taphole after the previous heat has been tapped. Slag stopping was performed in late tapping stage to ensure that a slag thickness in a ladle was less than 120 mm. A tapping time was maintained at 5 min, and the shape of the taphole was controlled to avoid tapping vortex flow. Alloys were added to a obtained liquid steel starting at one fifth of the tapping and ending at four fifths of the tapping for deoxidation alloying. Deoxidation alloying was carried out by adding ferrosilicon and ferroaluminum. Ferrosilicon was added first, then high manganese was added, and finally ferroaluminum was added after an interval of more than 1 min. N content in the ladle was controlled to be 23 ppm.

3. Refining procedure:

A single-path LF furnace was employed for refining. Active lime and fluorite were used to prepare reducing slags with good fluidity, and the intensity of argon stirring was strictly controlled to prevent exposure of the liquid steel. The liquid steel was treated with rare earth containing cerium, lanthanum and iron (the rare earth included 48% of Ce, 32% of La, 5% of Pr, 5% of Nd, 8% of Pm+Sm+Eu+Gd, and the balance of Fe and other inevitable impurities) to fully spheroidize the inclusions and improve the product performance. Soft argon stirring was performed to the liquid steel for 12 min before the end of the rare earth treatment. After normal refining heats, a ladle departure temperature from the LF furnace was controlled at 1563-1573 °C.

4. Continuous casting procedure:

Protected casting was maintained throughout the entire procedure process with no liquid steel exposed. A tundish was purged with argon before casting. The submerged entry nozzle of the tundish was thoroughly cleaned after each heat's casting operation, and remained vertical during casting. An immersion depth of a submerged entry nozzle of a ladle was controlled to be 230 mm. Slag detection was employed to control the slag carry-over amount, avoiding slag carry-over from the ladle. A secondary cooling zone of the continuous casting adopted a soft cooling mode and a soft reduction, and achieved a cooling depth of 3 mm on the surface of the cast billet, with a constant drawing speed controlled within 1.1 m/min and a superheat degree of the continuous casting of 20°C.

II. Hot rolling

1. Heating procedure in reheating furnace:

A reheating furnace discharge temperature was 1250°C. The atmosphere inside the reheating furnace was controlled to minimize the formation of iron oxide scale on the billet, ensuring uniform heating temperature. A residence time in the reheating furnace was 189 min, and a soaking time was 60 min.

2. Rough rolling procedure:

A 3+5 pass schedule pattern was adopted in the rough rolling procedure, that is, 3 passes of reciprocating rolling was adopted on rolling roll R1 and 5 passes of reciprocating rolling was adopted on rolling roll R2, to obtain a finished coil with thinner thickness and reduce loads on the finishing mill. Meanwhile, an initial rolling temperature of R1 was controlled to be 1156°C. High-pressure water descaling at high temperatures was performed to more effectively remove the iron oxide scale from the steel surface. A thickness of an intermediate billet was 37.2 mm, and a cumulative reduction rate of the rough rolling was 83.8%.

3. Finishing rolling procedure:

An initial rolling temperature of the finishing rolling was 1077 °C, a reduction rate of finishing roll F1 was 50.3%, and a reduction rate of finishing roll F2 was 29.8%. Since the thin-gauge high-strength steels of the present disclosure have large deformation resistance, a high-temperature final rolling was adopted at a final rolling temperature of 890°C.

III. Coiling

A two-stage cooling was adopted for coiling, which is more suitable for large scale production. Given that high-titanium steel is highly temperature-sensitive, the coiling temperature was set at 650°C to promote the full precipitation of "effective Ti" (TiC) and achieves good precipitation strengthening. If the coiling temperature is low, it adversely affects coil shape control and makes rolling process difficult to regulate. If the coiling temperature is high, insufficient TiC precipitation and inadequate cooling rate will result in ineffective precipitation strengthening and grain refinement, making the steel fail to meet strength requirements.

IV. Storage

The rolled steel coil was slowly cooled (with a cooling time of greater than or equal to 32 hours) by perimeter-controlled cooling, that is, the rolled steel coil was placed inside other high-temperature coils, located away from the warehouse entrance, to allow the rolled steel coil to cool down slowly and sufficiently, ensuring a good coil shape and release of internal stresses.

The performance requirements and test results of the vehicle beam steel prepared in this embodiment are shown in Table 2.

Table 2 Performance requirements and test results of vehicle beam steel

| Thickness /mm | Tensile test [a] | | | 180° Bending test [c] |
|---|---|---|---|---|
| | Lower yield strength [b] ReL /MPa | Tensile strength Rm /MPa | Elongation A after fracture /% $L_0=5.65\sqrt{S_0}$ | b≥35mm d-Bending diameter a-Sample thickness |
| Chinese standard | ≥610 | ≥680 | ≥15 | d=2.0a (d=0a) |
| 1.5 | 677 | 717 | 26.0 | Qualified (Qualified) |

**Embodiment 2**

This embodiment provides a method for manufacturing a 1.8mm-thick 700 MPa-grade hot-rolled vehicle beam steel. The processes of this embodiment follows the same steps as in Embodiment 1, with the only difference being in the following aspects:

1. The chemical composition and weight percentages of the vehicle beam steel are shown in table 3.

Table 3 Specification, composition and weight percentages (%) of vehicle beam steel

| Specification /mm | C | Si | Mn | P | S | Al | Ti | N | O | Re | Others |
|---|---|---|---|---|---|---|---|---|---|---|---|
| 1.8 | 0.09 | 0.19 | 1.30 | 0.012 | 0.003 | 0.041 | 0.122 | 0.0033 | 0.0019 | 0.002 | Fe and inevitable impurities |

2. The reheating furnace discharge temperature was 1255°C, the residence time in the reheating furnace was 192 min, and the soaking time was 58 min. The initial rolling temperature of R1 was 1150°C, the thickness of the intermediate billet was 38.1 mm, and the cumulative reduction rate of the rough rolling was 83.4%. The initial rolling temperature of the finishing rolling was 1068°C, the reduction rate of F1 was 49.9%, the reduction rate of F2 was 30.6%, and the final rolling temperature was 896°C. The coiling temperature was 645°C.

The performance requirements and test results of the vehicle beam steel prepared by the embodiment are shown in Table 4.

Table 4 Performance requirements and test results of vehicle beam steel

| Thickness /mm | Tensile test [a] | | | 180° Bending test [c] |
|---|---|---|---|---|
| | Lower yield strength [b] ReL /MPa | Tensile strength Rm /MPa | Elongation A after fracture /% $L_0 = 5.65\sqrt{S_0}$ | b≥35mm d-Bending diameter a-Sample thickness |
| Chinese standard | ≥610 | ≥680 | ≥15 | d=2.0a (d=0a) |
| 1.8 | 689 | 721 | 22.5 | Qualified (Qualified) |

**Embodiment 3**

This embodiment provides a method for manufacturing a 2.0mm-thick 700 MPa-grade hot-rolled vehicle beam steel. The processes of this embodiment follows the same steps as the Embodiment 1, with the only difference being in the following aspects:

1. The chemical composition and weight percentages of the vehicle beam steel are shown in table 5.

Table 5 Specification, composition and weight percentages (%) of vehicle beam steel

| Specification /mm | C | Si | Mn | P | S | Al | Ti | N | O | Re | Others |
|---|---|---|---|---|---|---|---|---|---|---|---|
| 2.0 | 0.08 | 0.12 | 1.18 | 0.013 | 0.002 | 0.035 | 0.118 | 0.0029 | 0.0020 | 0.003 | Fe and inevitable impurities |

2. The reheating furnace discharge temperature was 1246°C, the residence time in the furnace was 183 min, and the soaking time was 55 min. The initial rolling temperature of R1 was 1142°C, the thickness of the intermediate billet was 38.5 mm, and the cumulative reduction rate of the rough rolling was 83.3%. The initial rolling temperature of the finishing rolling was 1050°C, the reduction rate of F1 was 50.6%, the reduction rate of F2 was 30.1%, and the final rolling temperature was 901°C. The coiling temperature was 658°C.

The performance requirements and test results of the vehicle beam steel prepared by the embodiment are shown in Table 6.

Table 6 Performance requirements and test results of vehicle beam steel

| Thickness /mm | Tensile test [a] | | | 180° Bending test [c] |
| --- | --- | --- | --- | --- |
| | Lower yield strength [b] ReL /MPa | Tensile strength Rm /MPa | Elongation A after fracture /% $L_0=5.65\sqrt{S_0}$ | b≥35mm d-Bending diameter a-Sample thickness |
| Chinese standard | ≥610 | ≥680 | ≥15 | d=2.0a (d=0a) |
| 1.8 | 670 | 708 | 22.0 | Qualified (Qualified) |

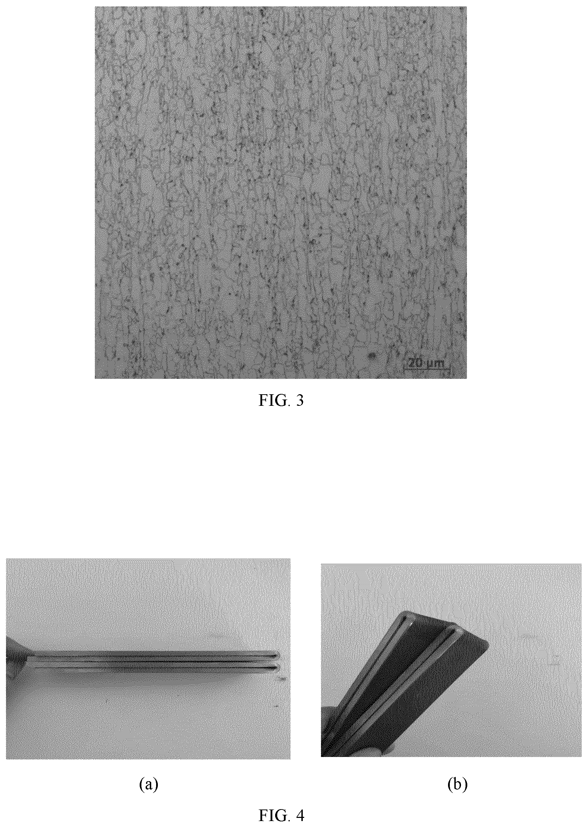

The 2.0mm-thick 700 MPa-grade hot-rolled vehicle beam steel prepared in this embodiment exhibits a metallographic microstructure of polygonal ferrite with a grain size ≥13.0 grade (see FIG. 3), and the 180° bending test (d=0a) demonstrates crack-free bending performance (see FIG. 4).

At last, it should be noted that the above various embodiments are merely intended to illustrate the technical solution of the present invention and not to limit the same; although the present invention has been described in detail with reference to the foregoing embodiments, it should be understood by those ordinary skilled in the art that the technical solutions described in the foregoing embodiments can be modified or equivalents can be substituted for some or all of the technical features therefor; and the modification or substitution does not make the essence of the corresponding technical solution deviate from the scope of the technical solution of each embodiment of the present invention.

## Claims

1. A 700MPa-grade hot-rolled vehicle beam steel with a specification of 1.2-2.0 mm, comprising the following chemical components in percentage by weight: 0.05-0.10% of C, 0.10-0.25% of Si, 1.10-1.35% of Mn, 0.020-0.050% of Al, 0.105-0.130% of Ti, less than or equal to 0.020% of P, less than or equal to 0.005% of S, 0.0020-0.0050% of N, 0.0010-0.0030% of O, less than or equal to 0.01% of rare earth Re, and the balance of Fe and inevitable impurities, wherein the rare earth comprises Ce greater than or equal to 40% and La greater than or equal to 30%; and a lower yield strength of the hot-rolled beam steel is greater than or equal to 610 MPa, a tensile strength is greater than or equal to 680 MPa, and an elongation A after fracture is greater than or equal to 15 %.

2. The 700MPa-grade hot-rolled vehicle beam steel with a specification of 1.2-2.0 mm according to claim 1, wherein comprises the following chemical components in percentage by weight: 0.07-0.10% of C, 0.10-0.20% of Si, 1.15-1.30% of Mn, 0.020-0.050% of Al, 0.105-0.125% of Ti, less than or equal to 0.015% of P, less than or equal to 0.003% of S, 0.0020-0.0050% of N, 0.0010-0.0030% of O, 0.001-0.005% of rare earth, and the balance of Fe and inevitable impurities, wherein the rare earth comprises Ce greater than or equal to 40% and La greater than or equal to 30%.

3. A method for manufacturing the 700MPa-grade hot-rolled vehicle beam steel with a specification of 1.2-2.0 mm according to claim 1 or claim 2, mainly comprising processes of steelmaking, hot rolling, coiling, and storage, wherein the steelmaking process comprises a pretreatment procedure, a basic oxygen furnace smelting procedure, a refining procedure, and a continuous casting procedure; the hot rolling process comprises a heating procedure in reheating furnace, a rough rolling procedure, and a finishing rolling procedure; the coiling process employs a two-stage cooling at a coiling temperature of 630-670 °C; and the storage process involves slowly cooling a steel coil after rolling by perimeter-controlled cooling.

4. The manufacturing method according to claim 3, wherein before entering the basic oxygen furnace, a liquid steel is subjected to pretreated in the pretreatment procedure to reduce its S content less than or equal to 0.0030% and slags are removed.

5. The manufacturing method according to claim 3, wherein the basic oxygen furnace smelting procedure comprises performing single-hit carbon control, and performing slag stopping in early and late tapping stages to ensure that a slag thickness in a ladle is less than 120 mm, maintaining a tapping time is at 4-7 min, adding alloy to the liquid steel starting at one fifth of the tapping and ending at four fifths of the tapping for deoxidation alloying, wherein deoxidation alloying is performed by adding ferrosilicon and ferroaluminum, and a N content in the ladle is controlled to be less than or equal to 25 ppm.

**6.** The manufacturing method according to claim 3, wherein the refining procedure adopts a single-path LF furnace for refining and uses active lime and fluorite to prepare reducing slags for preventing exposure of the liquid steel, the liquid steel is treated with rare earth containing cerium, lanthanum and iron, followed by soft argon stirring for greater than or equal to 10 min before the end of the rare earth treatment, and a ladle departureLF temperature from the LF furnace is controlled at 1563-1573°C.

**7.** The manufacturing method according to claim 3, wherein during the continuous casting procedure, protected casting is maintained throughout the entire procedure with no liquid steel exposed, a tundish is purged with argon before casting, and a submerged entry nozzle of the tundish remains vertical during casting; an immersion depth of a submerged entry nozzle of a ladle is controlled to be 200-250 mm, a slag detection is employed to control the slag carry-over amount, avoiding slag carry-over from the ladle; and a secondary cooling zone of the continuous casting adopts a soft cooling mode and a soft reduction, with a constant casting speed controlled within 1.0-1.5 m/min and a superheat degree of the continuous casting less than or equal to 25°C.

**8.** The manufacturing method according to claim 3, wherein during the heating procedure in reheating furnace, a reheating furnace discharge temperature is 1220-1260°C, a residence time in the furnace is greater than or equal to 160 min, and a soaking time is greater than or equal to 50 min.

**9.** The manufacturing method according to claim 3, wherein the rough rolling procedure adopts a 3+5 pass schedule pattern, that is, 3 passes of reciprocating rolling on rolling roll R1 and 5 passes of reciprocating rolling on rolling roll R2, an initial rolling temperature of R1 is controlled to be greater than or equal to 1130°C, and high-pressure water descaling at high temperatures is performed; and a thickness of an intermediate billet is 30-45 mm, and a cumulative reduction rate of the rough rolling is greater than 75%.

**10.** The manufacturing method according to claim 3, wherein during the finishing rolling procedure, an initial rolling temperature of the finishing rolling is 1030-1100°C, a reduction rate of finishing roll F1 is greater than or equal to 45%, a reduction rate of finishing roll F2 is greater than or equal to 25%, and a final rolling temperature is greater than or equal to 890°C.

FIG. 1

FIG. 2

FIG. 3

(a)                            (b)

FIG. 4

## INTERNATIONAL SEARCH REPORT

| International application No. |
| --- |
| **PCT/CN2023/106970** |

| A. | CLASSIFICATION OF SUBJECT MATTER |
| --- | --- |

C22C38/02(2006.01)i; C22C38/04(2006.01)i; C22C38/06(2006.01)i; C22C38/14(2006.01)i; B21B1/26(2006.01)i; B21B37/16(2006.01)i; B21B37/74(2006.01)i; B22D11/00(2006.01)i; C22C33/06(2006.01)i

According to International Patent Classification (IPC) or to both national classification and IPC

| B. | FIELDS SEARCHED |
| --- | --- |

Minimum documentation searched (classification system followed by classification symbols)

IPC：C22C，B21B，B22D

Documentation searched other than minimum documentation to the extent that such documents are included in the fields searched

Electronic data base consulted during the international search (name of data base and, where practicable, search terms used)

CNTXT, ENTXT, SIPOABS, DWPI, CNKI: 碳, C, 硅, Si, 锰, Mn, 铝, Al, 钛, Ti, 稀土, Re, 铈, Ce, 镧, La, 热轧, 大梁钢, carbon, silicon, manganese, aluminium, titanium, rare earth, cerium, lanthanum, hot roll+, beam steel

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115747643 A (BENGANG STEEL PLATES CO., LTD.) 07 March 2023 (2023-03-07) claims 1-10 | 1-10 |
| Y | CN 113943892 A (BAOTOU IRON & STEEL (GROUP) CO., LTD.) 18 January 2022 (2022-01-18) description, paragraphs 7-12 and 43 | 1-10 |
| Y | CN 112030071 A (BENGANG STEEL PLATES CO., LTD.) 04 December 2020 (2020-12-04) description, paragraphs 34, 48, 50, 54, 55, and 67 | 1-10 |
| Y | CN 113235010 A (BAOWU GROUP ECHENG IRON AND STEEL CO., LTD.) 10 August 2021 (2021-08-10) description, paragraphs 4-13 and 22 | 1-10 |
| Y | JP 2014148696 A (JFE STEEL CORP.) 21 August 2014 (2014-08-21) claims 1-9 | 1-10 |
| A | CN 111235477 A (BENGANG STEEL PLATES CO., LTD.) 05 June 2020 (2020-06-05) entire document | 1-10 |

☑ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 October 2023** | **26 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/106970** |

### C.   DOCUMENTS CONSIDERED TO BE RELEVANT

| Category* | Citation of document, with indication, where appropriate, of the relevant passages | Relevant to claim No. |
|---|---|---|
| A | CN 114836696 A (ANGANG STEEL CO., LTD.) 02 August 2022 (2022-08-02)<br>        entire document | 1-10 |

Form PCT/ISA/210 (second sheet) (July 2022)

**INTERNATIONAL SEARCH REPORT**
Information on patent family members

International application No.

**PCT/CN2023/106970**

| Patent document cited in search report | | | Publication date (day/month/year) | Patent family member(s) | | | Publication date (day/month/year) |
|---|---|---|---|---|---|---|---|
| CN | 115747643 | A | 07 March 2023 | None | | | |
| CN | 113943892 | A | 18 January 2022 | None | | | |
| CN | 112030071 | A | 04 December 2020 | None | | | |
| CN | 113235010 | A | 10 August 2021 | CN | 113235010 | B | 10 May 2022 |
| JP | 2014148696 | A | 21 August 2014 | JP | 5637225 | B2 | 10 December 2014 |
| | | | | TW | 201441384 | A | 01 November 2014 |
| | | | | TWI | 518187 | B | 21 January 2016 |
| | | | | KR | 20150096511 | A | 24 August 2015 |
| | | | | KR | 101772476 | B1 | 30 August 2017 |
| | | | | WO | 2014119259 | A1 | 07 August 2014 |
| | | | | US | 2015368738 | A1 | 24 December 2015 |
| | | | | EP | 2952603 | A1 | 09 December 2015 |
| | | | | EP | 2952603 | A4 | 24 February 2016 |
| | | | | EP | 2952603 | B1 | 19 December 2018 |
| CN | 111235477 | A | 05 June 2020 | CN | 111235477 | B | 21 September 2021 |
| CN | 114836696 | A | 02 August 2022 | None | | | |

Form PCT/ISA/210 (patent family annex) (July 2022)

15